# EUROPEAN PATENT SPECIFICATION

(11) **EP 0 844 908 B1**
(45) Date of publication and mention of the grant of the patent: **18.04.2001**
(21) Application number: 95923600.1
(22) Date of filing: 10.07.1995
(51) Int. Cl.: B01J 8/28, B01J 8/32

(54) **SEPARATING SOLIDS FROM A MIXTURE IN A GAS-SOLID FLUIDISED BED**
TRENNUNG VON FESTSTOFFEN AUS EINER MISCHUNG IN EINEM GAS-FESTSTOFF WIRBELSCHICHT
SEPARATION DE MATIERES SOLIDES A PARTIR D'UN MELANGE DANS UN LIT FLUIDISE GAZ-SOLIDE

(43) Date of publication of application: 03.06.1998
(73) Proprietor: Rijksuniversiteit te Groningen, 9712 CP Groningen (NL)
(72) Inventor: HARTHOLT, Gertjan, Pieter, NL-9601 XE Hoogezand (NL); LA RIVIERE, René, NL-9718 GA Groningen (NL); HOFFMANN, Alex, Christian, NL-9721 WT Groningen (NL); JANSSEN, Léon, Peter, Bernard, Marie, NL-9301 WB Roden (NL)
(74) Representative: Smulders, Theodorus A.H.J., Ir.
(86) International application number: NL9500243
(87) International publication number: WO9702887

(56) References cited:
- DE-B- 1 181 628
- DE-B- 2 167 070
- US-A- 4 154 581
- PATENT ABSTRACTS OF JAPAN vol. 6 no. 54 (C-097) ,9 April 1982 & JP,A,56 168830 (MITSUBISHI HEAVY IND. LTD.) 25 December 1981, & DATABASE WPI Section Ch, Week 8206 Derwent Publications Ltd., London, GB; Class J04, AN 82-10782E & JP,A,56 168 830 (MITSUBISHI HEAVY IND. K.K.) , 25 December 1981
- R.H. OVERCASHIER, D.B. TODD, R.B. OLNEY: "Some effects of baffles on a fluidized system", A.I.CH.E JOURNAL, , , vol. 5, no. 1, pages 54 to 60
- N.I. GEL'PERIN, V.G. AINSHTEIN, V.B.KVASHA, A.S. KOGAN, S.A. VIL'NITS: "Apparatus for classification of free-flowing materials in a fluidized bed ", INTERNATIONAL CHEMICAL ENGINEERING, , , vol. 4, no. 2, pages 198 to 203
- R.C. BAILIE, D.S. CHUNG, L-S. FAN: "Longitudinal solid density distribution in gas-solid screen fluidzed beds", I & EC FUNDAMENTALS, , , vol. 2, no. 3, pages 245 to 246
- P. CAI, M. SCHIAVETTI, G. DE MICHELE, G.C. GRAZZINI, M. MICCIO: "Quantative estimation of bubble size in PFBC", POWDER TECHNOLOGY, , , vol. 80, no. , pages 99 to 109
- C.Y.WEN, Y.H. YU: "Mechanics of Fluidisation", CHEMICAL ENGINEERING PROGRESS SYMPOSIUM SERIES, , 1966, vol. 62, no. 62, pages 100 to 111
- D. GELDART: "The effect of particle size and size distribution on the behaviour of gas-fluidised beds", POWDER TECHNOLOGY, , 1972, vol. 6, no. , pages 201 to 215
- P.N. ROWE: "Prediction of bubble size in a gas fluidised bed", CHEMICAL ENGINEERING SCIENCE , , -1976, vol. 31, no. , pages 285 to 288
- R.C. DARTON, R.D. LANAUZE, J.F. DAVIDSON, D. HARRISON: "Bubble growth due to coalenscence in fluidised beds", TRANSACTIONS OF THE INSTITUTE OF CHEMICAL ENGINEERS, , 1977, vol. 55, no. , pages 274 to 280

## Description

### TECHNICAL FIELD AND BACKGROUND ART

The invention relates to a method for separating according to the introductory portion of claim 1 and to fluidised bed systems according to the introductory portions of claims 13 and 14.

The particles to be separated can either be a distinct type of particles or a category of particles having at least one property in a predetermined subrange of a continuous distribution range of that property in the mixture.

Such a method and such fluidised bed systems are known from a publication entitled "Apparatus for Classification of Free-Flowing Materials in a Fluidized Bed", by N.I. Gel'perin et al. International Chemical Engineering, Vol. 4, No. 2 April 1964.

### SUMMARY OF THE INVENTION

It is an object of the present invention to provide a method and a system in which types or categories of particles having physical properties within specific ranges can be more effectively separated from particles having at least one different physical property in a simpler manner, still without admixing a fluidising medium and without mechanically stirring.

In accordance with the present invention, this object is achieved by carrying out the separation method in accordance with claim 1. For achieving this objective, the invention further provides a fluidised bed system in accordance with claim 13.

By selecting the flow velocity of the gas adequately, the separation of the type of particles to be separated can be achieved without previously admixing a fluidising medium and without mechanically stirring the fluidised bed, since the gas flow causes sufficient axial disturbance to promote the desired demixing of the fluidised bed, while not disturbing the fluidised bed to an extent that material axially moving in wakes of rising bubbles is remixed, which is counterproductive with respect to the goal of obtaining segregation in the fluidised bed. Particles axially moving in wakes of rising bubbles are at least to a large extent refrained from further following the bubbles at the baffle or baffles, while passing bubbles are not substantially disturbed at the baffle or baffles, so the stirring effect thereof is substantially maintained.

The invention can also be embodied in a fluidised bed system according to claim 14, which is adapted for treating particles within the vessel, the treatment including a change of at least one physical property such that treated particles form another type or category of particles than untreated particles, but which may also be provided with only a single discharge opening. In such a fluidised bed system untreated particles are to remain in the vessel until they have been treated. Therefore, a single discharge opening for discharging treated particles separated from untreated or partially untreated particles is in principle sufficient for enabling discharging the separated particles in such a system.

### BRIEF DESCRIPTION OF THE DRAWINGS

Fig. 1 is a schematic representation of a first example of a fluidised bed system according to the invention,
Fig. 2 is a schematic representation of a second example of a fluidised bed system according to the invention,
Fig. 3 is a schematic representation of a section of a rod assembly for mounting baffles,
Fig. 4 is a schematic top plan view of a baffle supported by three rods,
Figs. 5 and 6 are top plan views of alternative baffles,
Fig. 7 is a graphics showing jetsam concentration curves when different types of baffles are used, and
Fig. 8 is a graphics showing jetsam concentration curves at different gas flow velocities.

### MODES FOR CARRYING OUT THE INVENTION

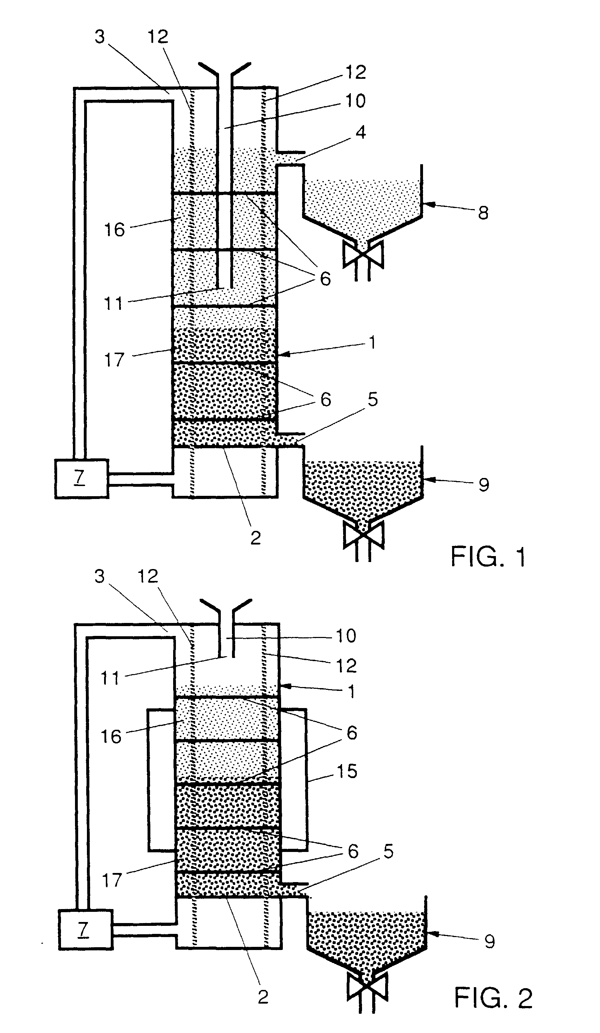

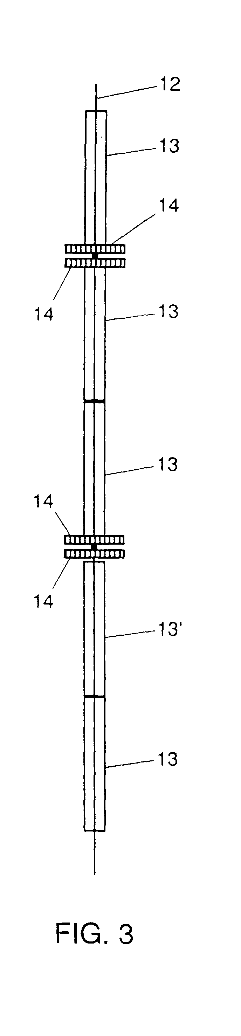

In the drawings identical reference numerals are used to refer to corresponding parts of different embodiments. The invention is first explained with reference to a presently most preferred embodiment schematically shown in Figs. 1, 3 and 4 and with reference to a most preferred mode of operation.

The fluidised bed system as shown in Fig. 1 is intended for separating one type or category of particles from a mixture of solid particles of different types or categories having different physical properties.

The core of the fluidised bed system is formed by a vertically elongate vessel 1 provided with a gas distributor 2 at its lower end, a gas exhaust and recycling passage 3 spaced from the lower end and two discharge openings 4, 5 at different levels between the gas distributor 2 and the gas exhaust passage 3. Between the two discharge passages 4, 5 five baffles 6 are disposed, each baffle being horizontally oriented. The vessel is further provided with a feeding passageway 10 with a debouchment 11 also at a level between the two discharge passages 4, 5. If the gas leaving the fluidised bed does not have any specific desirable or undesirable properties in comparison with ambient air, it is generally more advantageous to pass the gas through the fluidised bed on a once-through basis, i.e. without recycling the gas.

The system further includes a circulating device 7 for generating a gas flow through the vessel 1. Such devices are well-known in the art, so the circulating device 7 is only depicted very schematically.

The system may also be provided with a cyclone (not shown) for removing particles and dust from gas leaving the vessel 1.

Downstream of each discharging passage 4, 5 a collecting station 8 respectively 9 for collecting separated particles is provided. The collecting stations 8, 9 are each in direct open communication with one of the discharge openings 4, 5.

In operation, a mixture of solid particles of different types or categories having different physical properties is fed into the vessel 1 via the feeding passageway 10. The particles are fluidised in the vessel 1 by an upward gas flow generated by the circulating device 7 so that a gas-solid fluidised bed is formed within which the baffles extend transversely. The velocity of the gas flow is selected such that the separation of the single type or category of particles is obtained in one single axial segregation step in the fluidised bed as depicted by segregated layers 16, 17 in the vessel 1. The separated particles 16, 17 can be discharged directly via the discharge passages 4, 5 into the collecting stations 8, 9 respectively.

By selecting the flow velocity of the gas adequately, the separation of the types of particles to be separated can be achieved without previously admixing a fluidising medium and without mechanically stirring the fluidised bed, since the gas flow causes sufficient axial disturbance to promote the desired demixing of the fluidised bed, while not disturbing the fluidised bed to an extent that material axially moving in wakes of rising bubbles is remixed, which is counterproductive with respect to the goal of obtaining segregation in the fluidised bed. More in particular, when a bubble passes a baffle, material travelling in the wake of that bubble is knocked out of the wake of that bubble, so axial remixing is limited.

Between successive baffles unobstructed free spaces are provided so that bubbles formed in the fluidised bed are free to rise upward through one or more of the baffles. A certain extent of bubble formation has a positive effect on the separating effectivity in particular if the bubbles are formed in the lowest partially segregated layer, probably because the bubbles disturb and stir the fluidised bed to a certain extent which allows particles to move either upward or downward, and thus to demix, as the bed settles. The free unobstructed spaces between successive baffles allow free passage of bubbles from baffle to baffle, so that a well distributed stirring effect is achieved.

If the fluidised bed has a height of 16 cm, preferably at least three to five baffles are used. In larger fluidised bed the number of baffles is preferably about proportionally larger.

To obtain a simple, reliable construction, the baffles are mounted so as to be stationary.

More in particular, the baffles are positioned by three assemblies, each assembly including a threaded tie-rod 12 carrying a plurality of spacers 13. The number of spacers 13 between successive baffles 6 determines the spacing between successive baffles 6. To provide sufficient supporting surface for the baffles 6 and to guide the rods 12 relative to the walls of the vessel 1, support rings 14 are provided adjacent each baffle 6.

In Fig. 2 an alternative fluidised bed system according to the invention is shown. This fluidised bed system is to a large extent similar to the fluidised bed system shown in Fig. 1.

However, the fluidised bed system according to Fig. 2 is provided with an injection unit for injecting a coating material or a binder for granulation into the vessel 1. This unit is schematically depicted and denoted by reference numeral 15. The feeding passageway 10 has its debouchment 11 in an upper part of the vessel 1 so that freshly fed particles are admixed to the top of the fluidised bed. The vessel 1 has a single discharge passage 5 communicating with a single collecting station 9.

The fluidised bed system according to this embodiment of the invention can for example be used for separating coated particles from uncoated and partially coated particles. Even if the coating material has a density similar or identical to that of the particles, particles will tend to move downward more as the amount of coating applied to that particle increases. Compared with fluidised beds in which a *plug flow* state is approached, the fluidised bed according to the invention provides the advantage that the extent to which each particle tends to move downward is dependent on the extent to which the treatment of that individual particle is completed. Therefore, the method according to this embodiment of the invention results in a more even distribution of the intensity of the treatment applied to the particles.

The treatment applied in the vessel 1 may be in the form of many other types of treatment, such as granulation by adding a binder, drying, baking. For some applications, the discharge passage will have to be located adjacent an upper section of the fluidised bed and the feeding passage will have to debouch in a lower part of the fluidised bed. If the treatment consists for example of the continuous roasting of popcorn, popped popcorn particles will, due to their reduced density, concentrate at the top of the fluidised bed from where they can be discharged.

Since in the method according to the invention the fluidised bed consists of the particles to be separated and does not include a fluidising medium, the particles to be separated as such are fluidised by the gas flow and not by interaction with a fluidising medium. It is therefore possible to separate the particles having the same density on the basis of the dimensions, the shape and the texture of the particles. If a fluidising medium is required this would not be possible, because a fluidising medium having a density between the densities of the components to be separated cannot be provided if both components have the same density.

Generally, an improved separating effect is achieved if the superficial velocity of the gas flow is at least above a minimum fluidising velocity of the type or category of particles in the mixture having the second highest minimum fluidising velocity. In most cases the optimum lies at a superficial velocity of the gas flow close to or slightly below the minimum fluidising velocity of the type or category of particles in the mixture having the highest minimum fluidising velocity. Preferably, the gas flow velocity should be about 75-105 % and more preferably 85-100 % of the minimum fluidising velocity of the type of particles having the highest minimum fluidising velocity.

A particularly effective separation is achieved if the superficial velocity of the gas flow is at or above a minimum velocity at which bubbles rise through the fluidised bed, especially when a vessel 1 having obstruction-free interspaces between successive baffles is used.

On the other hand, if the superficial velocity of the gas flow is too high (substantially above the minimum fluidising velocity of the type or category of particles in the mixture having the highest minimum fluidising velocity), the fluidised bed is generally mixed too much by the bubbles rising through the bed, which has an adverse effect on the segregating effectivity.

The method according to the invention can also be used to separate three or more types of particles in a single fluidised bed. For this purpose, the velocity of the gas flow in an upper section of the fluidised bed should preferably be lower than in a lower section of the bed. This may for example be achieved by using a vessel having a larger internal cross-section in an upper portion than in a lower portion. Preferably the particles should then be fed and discharged batchwise in alternating fashion to avoid inadvertent discharging of particles passing the level of discharge passage while moving to a preferred area adjacent another discharge opening.

Now an example of a method carried out according to the invention is described in more detail. Use was made of a 8.7 cm ID glass vessel 1 with a porous glass distributor 2. Within the vessel 1 five baffles 6 were positioned so as to be stationary, horizontally and in vertically spaced succession by three threaded tie-rods 12 extending vertically within the vessel 1 at angular intervals of 120°. The interspace between successive baffles 6 was maintained at 3 cm by spacers 13 guided over the rods 13.

The mixture to be separated consisted of 750 g glass ballotini having a surface mean diameter of 559 µm and 750 g glass ballotini having a surface mean diameter of 268 µm. The particle density was 2500 kg/m³ for both types of particles. The minimum fluidising velocities of the two types of particles were 0.23 m/s and 0.072 m/s respectively.

Segregation of the fluidised bed was determined by starting from a well-mixed condition until the bed reached a steady state. Then the gas flow was stopped and the bed was sectioned in layers with a vacuum technique. When uncovered the baffles could be removed individually from the bed without disturbing it by loosening screws at the top of the vessel 1. The concentration of particles of the two types in each layer of the bed was determined by screening.

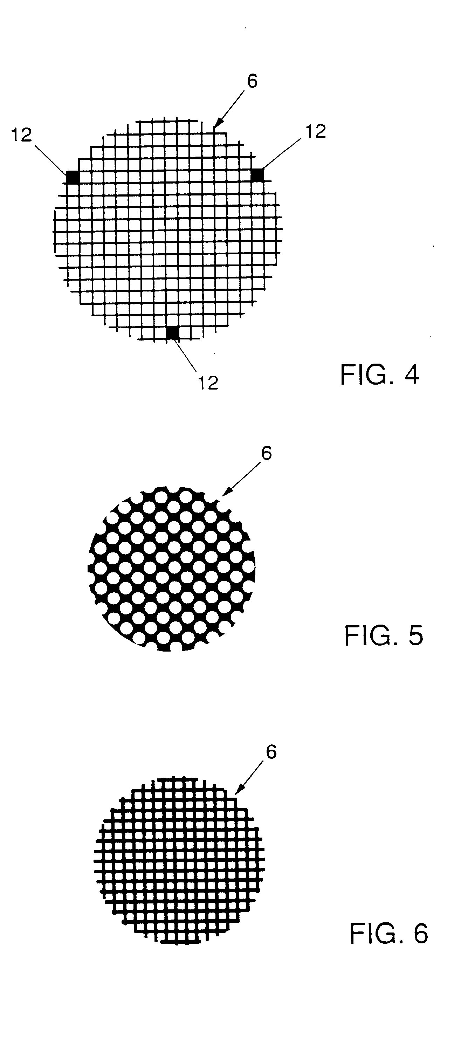

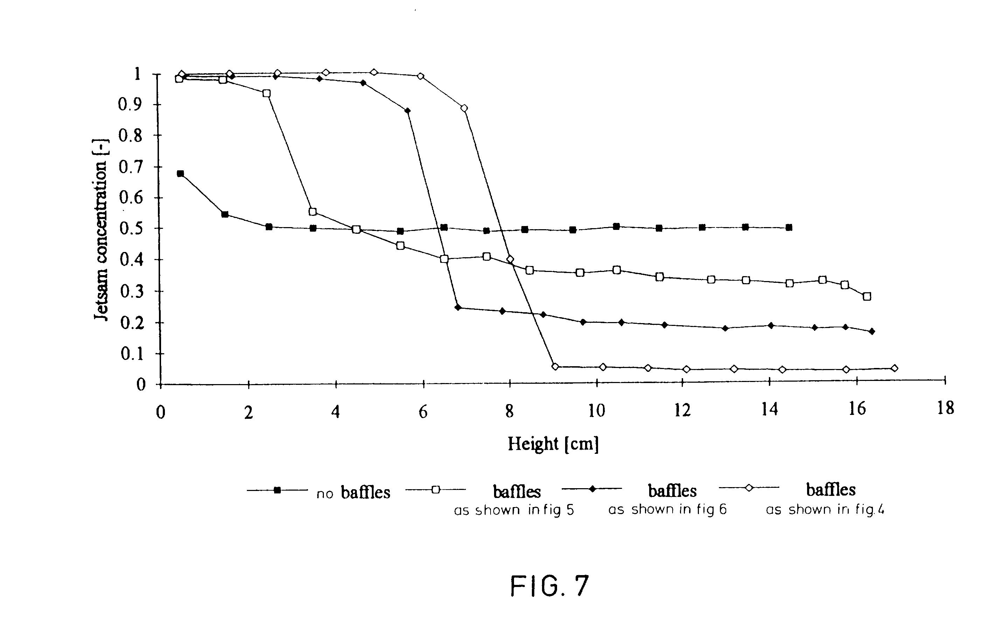

Fig. 7 shows the results obtained at a gas flow velocity of 0.208 m/s with no baffles and with baffles according to Fig. 4, Fig. 5 and Fig. 6. The jetsam concentration is the concentration of particles tending to concentrate in the bottom part of the bed. The results show that the best results are achieved with the baffles according to Fig. 4 which were made of wire mesh.

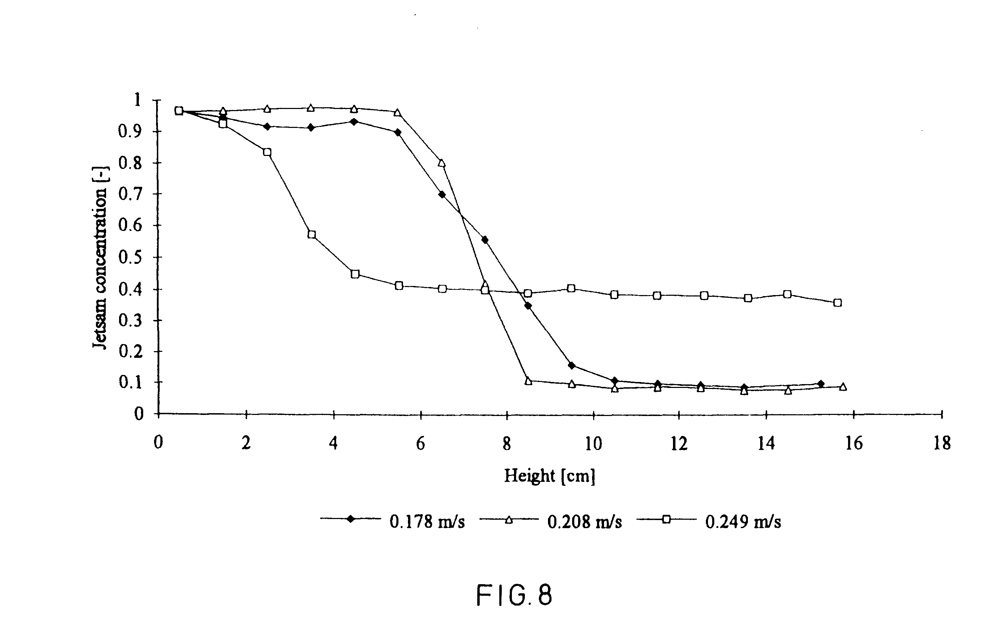

Fig. 8 shows the results obtained at different gas flow velocities and using slightly different (cleaned) particles, while using baffles as shown in Fig. 4. The results show that already at 0.178 m/s a useful degree of segregation is obtained, in particular when the purpose is to discharge jetsam particles at the lower end of the vessel 1. Best results were obtained at a gas velocity of 0.208 m/s whereas at the gas flow velocity of 0.249 m/s many jetsam particles were apparently mixed to upper portions of the vessel 1.

## Claims

1. A method for separating one type or category of particles from a mixture of solid particles of different types or categories having different physical properties in a single axial segregation step in a fluidised bed, comprising the steps of fluidising the particles in a gas-solid fluidised bed comprising at least one baffle (6) extending transversely within said bed and having a plurality of mutually spaced passages by leading an upward gas flow through said bed at a selected velocity and discharging a quantity of particles at least enriched in at least one of said types or categories of particles from the fluidised bed via a discharge passage (4, 5), **characterized in that** the velocity of the gas flow is selected such that one single set of single segregated layers each enriched in a different type or category of particles is obtained in said fluidised bed in which bubbles are not substantially disturbed while passing said at least one baffle and particles axially moving in the wakes of said bubbles passing said at least one baffle are at least partially refrained from following said bubbles at said at least one baffle.

2. A method according to claim 1, wherein said at least one baffle (6) of said fluidised bed is made of wire mesh.

3. A method according to claim 1 or 2, wherein said mixture of particles consists of two types or categories of particles.

4. A method according to any one of the preceding claims, wherein the particles of the separated type or category of particles have at least different dimensions, shapes or textures than other particles in the mixture and substantially the same density.

5. A method according to any of the preceding claims, wherein the superficial velocity of the gas flow is above a minimum fluidising velocity of the type or category of particles in the mixture having the second highest minimum fluidising velocity.

6. A method according to claim 1 or 5, wherein the superficial velocity of the gas flow is equal to or below a minimum fluidising velocity of the type or category of particles in the mixture having the highest minimum fluidising velocity.

7. A method according to claim 1 or 5, wherein the superficial velocity of the gas flow is 75-105 % of the minimum fluidising velocity of the type or category of particles having the highest minimum fluidising velocity.

8. A method according to claim 1 or 5, wherein the superficial velocity of the gas flow is 85-100 % of the minimum fluidising velocity of the type or category of particles having the highest minimum fluidising velocity.

9. A method according to any one of the preceding claims, wherein the fluidised bed comprises a plurality of baffles (6) arranged in vertically spaced succession and wherein the gas passes through unobstructed free space between successive baffles (6).

10. A method according to any one of the preceding claims, wherein the baffles (6) are maintained in stationary positions.

11. A method according to any one of the preceding claims, wherein the velocity of the gas flow in an upper section of the fluidised bed is lower than in a lower section of said bed.

12. A method according to any one of the preceding claims, wherein a single type or category of particles is fed to the fluidised bed, the particles are treated in said bed, said treatment including a change of at least one physical property such that treated particles form another type or category of particles than untreated particles, and the treated type or category of particles is separated from the untreated type or category of particles and discharged from the bed.

13. A fluidised bed system for separating one type or category of particles from a mixture of solid particles of different types or categories having different physical properties, comprising:
a vertically elongate vessel (1) provided with a gas distributor (2) at its lower end, a gas exhaust passage (3) spaced from said lower end and, at a level between said gas distributor (2) and said gas exhaust passage (3), at least two discharge passages (4, 5) at different levels and at least one baffle (6) extending transversely within said vessel and provided with mutually spaced passages;
a device (7) for generating a gas flow through said vessel (1) ; and
a collecting station (8, 9) for collecting separated particles, said collecting station (8, 9) being in direct and open communication with one of said discharge passages (4, 5) ;
**characterized in that**
said device (7) for generating a gas flow through said vessel (1) is adapted for generating a single set of segregated single layers each enriched in a different type or category of particles in said fluidised bed in which bubbles are not substantially disturbed while passing said at least one baffle and particles axially moving in the wakes of said bubbles passing said at least one baffle are at least partially refrained from following said bubbles at said at least one baffle.

14. A fluidised bed system for separating one type or category of particles from a mixture of solid particles of different types or categories having different physical properties comprising:
a vertically elongate vessel (1) provided with a gas distributor (2) at its lower end, a gas exhaust passage (3) spaced from said lower end and, at a level between said gas distributor (2) and said gas exhaust passage (3), at least one discharge passage (5) and at least one baffle (6) extending transversely within said vessel (1) and provided with mutually spaced passages; and
a collecting station (9) for collecting separated treated particles, said collecting station (9) being in direct and open communication with said discharge passage (5) ;
a device for generating a gas flow through said vessel;
**characterized by**
treatment means (15) for treating particles within said vessel (1), said treatment including a change of at least one physical property such that treated particles (17) form another type or category of particles than untreated particles (16); wherein
said device (7) for generating a gas flow through said vessel (1) is adapted for generating a single set of single segregated layers each enriched in a different type or category of particles in said fluidised bed in which bubbles are not substantially disturbed while passing said at least one baffle and particles axially moving in the wakes of said bubbles passing said at least one baffle are at least partially refrained from following said bubbles at said at least one baffle.

15. A fluidised bed system according to claim 13 or 14, wherein said at least one baffle (6) of said fluidised bed is made of wire mesh.

16. A fluidised bed system according to any one of claims 13-15, wherein the fluidised bed comprises a plurality of baffles (6) arranged in vertically spaced succession and at least one unobstructed free space between successive baffles (6).

17. A fluidised bed system according to any one of the claims 13-16, wherein the baffles (6) are mounted in a stationary position.

## Patentansprüche

1. Verfahren zum Trennen eines Typs oder einer Kategorie von Partikeln einer Mischung von Feststoffpartikeln verschiedener Typen oder Kategorien mit unterschiedlichen physikalischen Eigenschaften in einem einzelnen axialen Abscheidungsschritt in einem Wirbelbett, mit den folgenden Schritten: Fluidisieren der Partikel in einem Gas-Feststoff-Wirbelbett mit wenigstens einer Scheidewand (6), die sich in Querrichtung in der Schicht erstreckt und mehrere voneinander beabstandete Durchlässe aufweist, indern eine aufwärts gerichtete Gasströmung mit einer ausgewählten Geschwindigkeit durch die Schicht geleitet wird und eine Menge von Partikeln aus dem Wirbelbett über einen Auslaß (4, 5) ausgegeben wird, die mit wenigstens einem der Typen oder einer der Kategorien der Partikel angereichert ist, dadurch gekennzeichnet, daß die Geschwindigkeit der Gasströmung derart gewählt ist, daß eine einzelne Gruppe von einzelnen abgeschiedenen Schichten, die jeweils mit einem unterschiedlichen Typ oder Kategorie von Partikeln angereichert sind, in dem Wirbelbett erhalten wird, in der Blasen beim Passieren der wenigstens einen Scheidewand nicht wesentlich gestört werden und Partikel, die sich im Sog der die wenigstens eine Scheidewand passierenden Blasen in axialer Richtung bewegen, an der wenigstens einen Scheidewand wenigstens teilweise daran gehindert werden, den Blasen zu folgen.

2. Verfahren nach Anspruch 1, bei dem die wenigstens eine Scheidewand (6) des Wirbelbetts aus Maschendraht besteht.

3. Verfahren nach Anspruch 1 oder 2, bei dem die Mischung der Partikel aus zwei Typen oder Kategorien von Partikeln besteht.

4. Verfahren nach einem der vorhergehenden Ansprüche, bei dem die Partikel des separierten Typs oder Kategorie von Partlkeln wenigstens unterschiedilche Abmessungen, Formen oder Texturen im Vergleich mit anderen Partikeln in der Mischung und im wesentlichen dieselbe Dichte aufweisen.

5. Verfahren nach einem der vorhergehenden Ansprüche, bei dem die Oberflächengeschwindigkelt der Gasströmung über einer Mindest-Fluidisierungsgeschwindigkelt des Typs oder der Kategorie von Partikeln in der Mischung mit der zweithöchsten Mindest-Fluidisierungsgeschwindigkeit liegt.

6. Verfahren nach Anspruch 1 bis 5, bei dem die Oberflächengeschwindigkeit der Gasströmung gleich oder niedriger als eine Mindest-Fluidisierungsgeschwindigkeit des Typs oder der Kategorie von Partikeln in der Mischung mit der höchsten Mindest-Fluidisierungsgeschwindigkeit liegt.

7. Verfahren nach Anspruch 1 bis 5, bei dem die Oberflächengeschwindigkeit der Gasströmung 75 - 105% der Mindest-Fluidisierungsgeschwindigkeit des Typs oder der Kategorie von Partikeln in der Mischung mit der höchsten Mindest-Fluidisierungsgeschwindigkelt beträgt.

8. Verfahren nach Anspruch 1 bis 5, bei dem die Oberflächengeschwindigkeit der Gasströmung 85 - 100 % der Mindest-Fluidisierungsgeschwindigkeit des Typs oder der Kategorie von Partikeln in der Mischung mit der höchsten Mindest-Fluidisierungsgeschwindigkeit beträgt.

9. Verfahren nach einem der vorhergehenden Ansprüche, bei dem das Wirbelbett mehrere Scheidewände (6) aufweist, die in vertikal beabstandeter Folge angeordnet sind, und bei dem das Gas durch nicht eingeengten freien Raum zwischen aufeinanderfolgenden Scheidewänden (6) hindurchströmt.

10. Verfahren nach einem der vorhergehenden Ansprüche, bei dem die Scheidewände (6) In festen Positionen gehalten werden.

11. Verfahren nach einem der vorhergehenden Ansprüche, bei dem die Geschwindigkeit der Gasströmung in einem oberen Abschnitt des Wirbelbetts niedriger als in einem unteren Abschnitt des Betts ist.

12. Verfahren nach einem der vorhergehenden Ansprüche, bei dem dem Wirbelbett ein einzelner Typ oder Kategorie von Partikeln zugeführt wird, die Partikel in dem Bett behandelt werden, die Behandlung eine Veränderung wenigstens einer physikalischen Eigenschaft beinhaltet, derart, daß behandelte Partikel einen anderen Typ oder Kategorie von Partikeln bilden als nicht behandelte Partikel, und der behandelte Typ oder Kategorie von Partikeln von dem nicht behandelten Typ oder Kategorie von Partikeln getrennt und aus dem Bett ausgegeben wird.

13. Wlrbelbettsystem zum Trennen eines Typs oder einer Kategorie von Partikeln von einer Mischung von Feststoffpartikeln verschiedener Typen oder Kategorien mit unterschiedlichen physikalischen Eigenschaften, mit:
- einem vertikal langgestreckten Gefäß (1) mit einem Gasverteiler (2) an seinem unteren Ende, einem vom unteren Ende beabstandeten Gasauslaß (3) und, auf einer Höhe zwischen dem Gasverteiler (2) und dem Gasauslaß (3), wenigstens zwei auf verschiedenen Höhen befindlichen Auslässen (4, 5) und wenigstens einer Scheidewand (6), die sich in Querrichtung in dem Gefäß erstreckt und mit voneinander beabstandeten Durchlässen versehen ist;
- einer Vorrichtung (7) zum Erzeugen einer Gasströmung durch das Gefäß (1), und
- einer Sammelstation (8, 9) zum Sammeln abgeschiedener Partikel, wobei dle Sammelstation (8, 9) in direkter und offener Verbindung mit einem der Auslässe (4, 5) steht;
dadurch gekennzeichnet, daß
- die Vorrichtung (7) zum Erzeugen einer Gasströmung durch das Gefäß (1) geeignet ist, eine einzelne Gruppe von einzelnen segregierten Schichten, die jeweils mit einem unterschiedlichen Typ oder Kategorie von Partikeln angereichert sind, in dem Wirbelbett zu erhalten, in dem Blasen beim Passieren der wenigstens einen Scheidewand nicht wesentlich gestört werden und Partikel, die sich im Sog der dle wenigstens eine Scheidewand passierenden Blasen in axialer Richtung bewegen, an der wenigstens einen Scheidewand wenigstens teilweise daran gehindert werden, den Blasen zu folgen.

14. Wirbelbettsystem zum Trennen eines Typs oder einer Kategorie von Partikeln von einer Mischung von Feststoffpartikeln verschiedener Typen oder Kategorien mit unterschiedlichen physikalischen Eigenschaften, mit:
- einem vertikal langgestreckten Gefäß (1) mit einem Gasverteiler (2) an seinem unteren Ende, einem vom unteren Ende beabstandeten Gasauslaß (3) und, auf einer Höhe zwischen dem Gasverteiler (2) und dem Gasauslaß (3), wenigstens einem Auslaß (5) und wenigstens einer Scheidewand (6), die sich in Querrichtung in dem Gefäß (1) erstreckt und mit voneinander beabstandeten Durchlässen versehen ist; einer Sammelstation (9) zum Sammeln separierter Partikel, wobei die Sammelstation (9) in direkter und offener Verbindung mit dem Auslaß (5) steht;
- einer Vorrichtung zum Erzeugen einer Gasströmung durch das Gefäß,
gekennzeichnet durch
- eine Behandlungseinrichtung (15) zum Behandeln von Partikeln in dem Gefäß (1), wobei die Behandlung eine Veränderung wenigstens einer physikalischen Eigenschaft beinhaltet, derart, daß behandelte Partikel (17) einen anderen Typ oder Kategorie von Partikeln bilden als nicht behandelte Partikel (16), wobei
- die Vorrichtung (7) zum Erzeugen einer Gasströmung durch das Gefäß (1) geeignet ist, eine einzeine Gruppe von einzeinen abgeschiedenen Schichten, die jeweils mit einem unterschiedlichen Typ oder Kategorie von Partikeln angereichert sind, in dem Wirbelbett zu erhalten, In dem Blasen beim Passieren der wenigstens einen Scheidewand nicht wesentlich gestört werden und Partikel, die sich im Sog der die wenigstens eine Scheidewand passierenden Blasen in axialer Richtung bewegen, an der wenigstens einen Scheidewand wenigstens teilweise daran gehindert werden, den Blasen zu folgen.

15. Wirbelbettsystem nach Anspruch 13 oder 14, bei dem die wenigstens eine Scheidewand (6) des Wirbelbetts aus Maschendraht besteht.

16. Wirbelbettsystem nach einem der Ansprüche 13-15, bei dem das Wirbelbett mehrere Scheidewände (6), die in vertikal beabstandeter Folge angeordnet sind, und wenigstens einen nicht eingeengten freien Raum zwischen aufeinanderfolgenden Scheidewänden (6) aufweist.

17. Wirbelbettsystem nach einem der Ansprüche 13 - 16, bei dem die Scheidewände (6) in festen Positionen angebracht sind.

## Revendications

1. Procédé de séparation de particules d'un premier type ou catégorie, contenues dans un mélange de particules solides de différents types ou catégories, ayant des propriétés physiques différentes, dans une seule étape de ségrégation axiale dans un lit fluidisé, comprenant les étapes suitantes : la fluidisation des particules dans un lit fluidisé gaz-solide qui comporte au moins un déflecteur (6) disposé transversalement à l'intérieur du lit et possédant plusieurs passages espacés les uns des autres, par conduite d'un courant ascendant de gaz dans le lit à une vitesse choisie et par évacuation d'une quantité de particules au moins enrichies en particules du premier des types ou catégories au moins provenant du lit fluidisé par l'intermédiaire d'un passage d'évacuation (4, 5), caractérisé en ce que la vitesse du courant gazeux est sélectionnée afin qu'un seul ensemble de couches uniques obtenues par ségrégation, enrichies chacune en particules d'un type ou catégorie différent, est obtenu dans le lit fluidisé dans lequel les bulles ne sont pratiquement pas perturbées lors du passage du déflecteur au moins, et les particules qui se déplacent axialement dans le sillage des bulles passant au niveau du déflecteur au moins sont au moins partiellement soumises à une retenue s'opposant à ce qu'elles suivent les bulles au niveau du déflecteur au moins.

2. Procédé selon la revendication 1, dans lequel le déflecteur au moins (6) du lit fluidisé est formé d'une grille de fils métalliques.

3. Procédé selon la revendication 1 ou 2, dans lequel le mélange de particules est constitué de particules de deux types ou catégories.

4. Procédé selon l'une quelconque des revendications précédentes, dans lequel les particules du type ou catégorie des particules séparées ont au moins des dimensions, formes ou textures qui diffèrent de celles des autres particules du mélange, et ont pratiquement la même masse volumique.

5. Procédé selon l'une quelconque des revendications précédentes, dans lequel la vitesse superficielle du courant gazeux est supérieure à une vitesse minimale de fluidisation des particules du type ou catégorie de particules contenues dans le mélange et ayant la seconde vitesse minimale la plus élevée de fluidisation.

6. Procédé selon la revendication 1 ou 5, dans lequel la vitesse superficielle du courant gazeux est égale ou inférieure à une vitesse minimale de fluidisation des particules du type ou catégorie de particules contenues dans le mélange et qui ont la plus grande vitesse minimale de fluidisation.

7. Procédé selon la revendication 1 ou 5, dans lequel la vitesse superficielle du courant gazeux est comprise entre 75 et 105 % de la vitesse minimale de fluidisation des particules du type ou catégorie de particules ayant la plus grande vitesse minimale de fluidisation.

8. Procédé selon la revendication 1 ou 5, dans lequel la vitesse superficielle du courant gazeux est comprise entre 85 et 100 % de la vitesse minimale de fluidisation des particules du type ou catégorie ayant la plus grande vitesse minimale de fluidisation.

9. Procédé selon l'une quelconque des revendications précédentes, dans lequel le lit fluidisé comporte plusieurs déflecteurs (6) qui se suivent verticalement en étant espacés, et le gaz passe dans l'espace libre non encombré existant entre les déflecteurs successifs (6).

10. Procédé selon l'une quelconque des revendications précédentes, dans lequel les déflecteurs (6) sont maintenus dans des positions stationnaires.

11. Procédé selon l'une quelconque des revendications précédentes, dans lequel la vitesse du courant gazeux dans le tronçon supérieur du lit fluidisé est inférieure à la vitesse dans un tronçon inférieur du lit.

12. Procédé selon l'une quelconque des revendications précédentes, dans lequel des particules d'un seul type ou catégorie sont transmises au lit fluidisé, les particules sont traitées dans le lit, le traitement comprenant un changement d'au moins une propriété physique tel que les particules traitées forment des particules d'un type ou catégorie autre que celui des particules non traitées, et les particules du type ou catégorie de particules traitées sont séparées des particules du type ou catégorie de particules non traitées et évacuées hors du lit.

13. Système à lit fluidisé destiné à séparer des particules d'un premier type ou catégorie d'un mélange de particules solides de différents types ou catégories ayant des propriétés physiques différentes, comprenant :
un réservoir allongé verticalement (1) ayant un distributeur (2) de gaz à son extrémité inférieure, un passage (3) d'évacuation de gaz placé à distance de l'extrémité inférieure et, à un niveau compris entre le distributeur de gaz (2) et le passage (3) d'évacuation de gaz, au moins deux passages d'évacuation (4, 5) placés à des niveaux différents et au moins un déflecteur (6) qui s'étend transversalement dans le réservoir et ayant des passages espacée mutuellement,
un dispositif (7) destiné à créer un courant gazeux dans le réservoir (1), et
un poste collecteur (8, 9) destiné à collecter les particules séparées, le poste collecteur (8, 9) étant en communication directe et ouverte avec l'un des passages d'évacuation (4, 5),
caractérisé en ce que
le dispositif (7) destiné à créer un courant gazeux dans le réservoir (1) est destiné à créer un seul ensemble de couches uniques formées par ségrégation, enrichies chacune en particules d'un type ou catégorie-différent dans le lit fluidisé dans lequel les bulles ne sont pratiquement pas perturbées lors du passage au niveau du déflecteur au moins, et les particules qui se déplacent axialement dans le sillage des bulles passant au niveau du déflecteur au moins sont soumises à une retenue au moins partielle les empêchant de suivre les bulles au niveau du déflecteur au moins.

14. Système à lit fluidisé destiné à séparer des particules d'un premier type ou catégorie d'un mélange de particules solides de différents types ou catégories ayant des propriétés physiques différentes, comprenant :
un réservoir allongé verticalement (1) muni d'un distributeur de gaz (2) à son extrémité inférieure, d'un passage (3) d'évacuation de gaz placé à distance de l'extrémité inférieure et à un niveau compris entre le distributeur de gaz (2) et le passage d'évacuation de gaz (3), au moins un passage d'évacuation (5) et au moine un déflecteur (6) qui s'étend transversalement dans le réservoir (1) et ayant des passages espacés mutuellement,
un poste collecteur (9) destiné à collecter les particules traitées séparées, le poste collecteur (9) étant en communication directe et ouverte avec le passage d'évacuation (5), et
un dispositif destiné à créer un courant gazeux dans le réservoir,
caractérisé par
un dispositif de traitement (15) destiné à traiter les particules dans le réservoir (1), le traitement comprenant un changement d'au moins une propriété physique tel que les particules traitées (17) forment des particules d'un type ou catégorie autre que celui des particules non traitées (16), et dans lequel
le dispositif (7) destiné à créer un courant gazeux dans le réservoir (1) est destiné à créer un seul ensemble de couches uniques formées par ségrégation, enrichies chacune on particules d'un type ou catégorie différent dans le lit fluidisé dans lequel les bulles ne sont pratiquement par perturbées lors du passage au niveau d'un déflecteur au moins, et les particules se déplaçant axialement dans le sillage des bulles et passant au niveau du déflecteur au moins sont soumises à une retenue au moins partielle les empêchant de suivre les bulles au niveau du déflecteur au moins.

15. Système à lit fluidisé selon la revendication 13 ou 14, dans lequel le déflecteur au moins (6) du lit fluidisé est formé d'une grille de fil métallique.

16. Système à lit fluidisé selon l'une quelconque des revendications 13 à 15, dans lequel le lit fluidisé comporte plusieurs déflecteurs (6) disposée successivement et espacés verticalement, et au moins un espace libre sans obstacle compris entre les déflecteurs successifs (6).

17. Système à lit fluidisé selon l'une quelconque des revendications 13 à 16, dans lequel les déflecteurs (6) sont montés en position stationnaire.
